# DEMANDE DE BREVET EUROPEEN

(11) **EP 0 800 939 A1**
(43) Date de publication de la demande: **15.10.1997**
(21) Numéro de dépôt: 97400823.7
(22) Date de dépôt: 10.04.1997
(51) Int. Cl.: B60G 17/052, B60G 17/056

(54) **Dispositif correcteur d'assiette pour véhicules à suspension par coussins élastiques gonflables**

(30) Priorité: 10.04.1996 FR 9604458
(71) Demandeur: Desvigne, Claude-Jean, 77630 Barbizon (FR)
(72) Inventeur: Desvigne, Claude-Jean, 77630 Barbizon (FR)
(74) Mandataire: Bruder, Michel

(57) **Abrégé**

La présente invention concerne un dispositif correcteur d'assiette pour véhicules et notamment pour véhicules tous terrains du type comportant une suspension par coussins élastiques gonflables (5) alimentés par une source de gaz sous pression par l'intermédiaire d'une valve de commande (9), cette valve de commande (9) étant apte à commander par l'intermédiaire d'un limiteur de débit (21) la mise en communication de la source de gaz sous pression avec un coussin (5) lorsque celui-ci est comprimé, et la mise en communication de ce coussin (5) avec l'atmosphère lorsque le coussin (5) est décomprimé.

Ce dispositif est caractérisé en ce qu'une valve de nivellement (23') est interposée entre la valve de commande (9) et le coussin (5), cette valve de nivellement (23') comportant des moyens aptes à mettre directement en communication avec l'atmosphère l'intérieur du coussin (5) lorsque celui-ci est soumis à une décompression rapide.

## Description

La présente invention concerne un dispositif correcteur d'assiette pour véhicules tous terrains à suspension par coussins élastiques gonflables.

Certains véhicules tous terrains sont parfois amenés à se déplacer également sur route, si bien qu'ils doivent satisfaire à la fois aux exigences techniques propres à ces deux genres de locomotion.

La suspension de certains véhicules tous terrains est généralement constituée par des coussins gonflables interposés entre le châssis et l'essieu du véhicule. La course de la suspension fournie par ces coussins est très grande par rapport à celle des véhicules routiers, afin qu'ils puissent compenser les dénivellations importantes qu'ils sont en mesure de rencontrer de façon à maintenir le contact des roues du véhicule avec le sol et préserver ainsi les qualités d'adhérence de celui-ci.

Cependant, si une forte expansion des coussins est nécessaire pour permettre à la suspension d'être efficace lorsque le sol se dérobe verticalement sous le véhicule, cette forte expansion devient nuisible dans certaines circonstances d'utilisation. Tel est le cas notamment dans un virage où le véhicule est soumis à la force centrifuge, ou dans des circonstances où le véhicule est soumis à une forte accélération ou une forte décélération. En cas d'un virage serré par exemple, la force centrifuge a pour effet de soulager le coussin externe de sa charge, si bien que la pression interne de celui-ci le conduit à augmenter de volume, de sorte que le coussin augmente l'effet déstabilisateur de la force centrifuge. Un tel mode de suspension peut ainsi, dans certaines circonstances, devenir dangereux.

De même, en cas de freinage sur route, la décélération peut conduire, en raison du même phénomène que celui mentionné précédemment, à relever exagérément les coussins arrières du véhicule, limitant par le fait même l'adhérence au sol de ses roues arrières.

Afin d'éviter ces inconvénients, dans les dispositifs tous terrains de l'état antérieur de la technique qui sont amenés à se déplacer également sur route, les constructeurs réalisent un blocage mécanique en rotation de la suspension, blocage qui doit impérativement être supprimé lorsque le véhicule se déplace sur route.

La présente invention a pour but de proposer un moyen simple et peu onéreux permettant de limiter les conséquences de la force centrifuge sur ce type de véhicules lorsqu'ils se déplacent en "tous terrains" et les effets de l'accélération ou de la décélération lorsqu'ils se déplacent sur route.

La présente invention a ainsi pour objet un dispositif correcteur d'assiette pour véhicules et notamment pour véhicules tous terrains du type comportant une suspension par coussins élastiques gonflables alimentés par une source de gaz sous pression par l'intermédiaire d'une valve de commande, cette valve de commande étant apte à commander, par l'intermédiaire d'un limiteur de débit, d'une part la mise en communication de la source de gaz sous pression avec un coussin lorsque celui-ci est comprimé et d'autre part la mise en communication de ce coussin avec l'atmosphère lorsque le coussin est décomprimé, caractérisé en ce qu'une valve de nivellement est interposée entre la valve de commande et le coussin, cette valve de nivellement comportant des moyens aptes à mettre directement en communication avec l'atmosphère l'intérieur du coussin lorsque celui-ci est soumis à une décompression rapide.

Dans un mode de mise en oeuvre de l'invention la valve de nivellement comporte au moins trois orifices, à savoir un orifice d'entrée, un orifice de sortie et un orifice de mise en communication avec l'atmosphère, cette valve étant apte :
- lorsque les pressions de fluide à l'orifice d'entrée et à l'orifice de sortie sont égales, à assurer l'isolation des trois orifices,
- lorsque la pression de fluide à l'orifice d'entrée est supérieure à la pression à l'orifice de sortie, à autoriser la mise en communication de ces deux orifices,
- lorsque la pression de fluide à l'orifice d'entrée est inférieure à la pression à l'orifice de sortie, à autoriser la mise en communication de l'orifice de sortie avec l'orifice de mise en communication avec l'atmosphère.

Dans un autre mode de mise en oeuvre de l'invention la valve de nivellement est constituée d'une valve du type dit "à décharge rapide".

Dans un autre mode de mise en oeuvre de l'invention la valve de nivellement comprend un piston monté libre à l'intérieur d'un corps de valve, de façon à définir de chaque côté de celui-ci deux chambres, ce piston étant apte à occuper au moins deux positions, à savoir :
- une position de fonctionnement normal dans laquelle la première chambre est obturée et la seconde chambre est en communication avec le coussin,
- une position de déséquilibre dans laquelle une première chambre est en communication avec l'atmosphère par l'intermédiaire d'un limiteur de débit, et la seconde chambre est en communication avec le coussin et avec l'atmosphère de façon directe.

Dans une variante de mise en oeuvre le piston est apte à occuper une troisième position dans laquelle le coussin est soumis à une surpression, dans laquelle la première et la deuxième chambre sont en communication avec le coussin et avec la source de gaz sous pression par l'intermédiaire du limiteur de débit.

On décrira ci-après, à titre d'exemple non limitatif, une forme d'exécution de la présente invention, en référence au dessin annexé sur lequel :

La figure 1 est une vue en coupe transversale partielle d'un dispositif correcteur d'assiette suivant l'état antérieur de la technique, en position normale de fonctionnement.

La figure 2 est une vue en coupe transversale partielle d'un dispositif correcteur d'assiette suivant l'invention, en position normale de fonctionnement.

La figure 3 est une vue en coupe transversale partielle du dispositif correcteur d'assiette suivant l'invention représenté sur la figure 2, dans une position dans laquelle un coussin de suspension est en position d'extension.

La figure 4 est une vue en coupe transversale partielle du dispositif correcteur d'assiette représenté sur les figures 2 et 3 dans une position dans laquelle un coussin de suspension est en position de compression.

La figure 5 est un schéma de fonctionnement d'un mode de mise en oeuvre de l'invention.

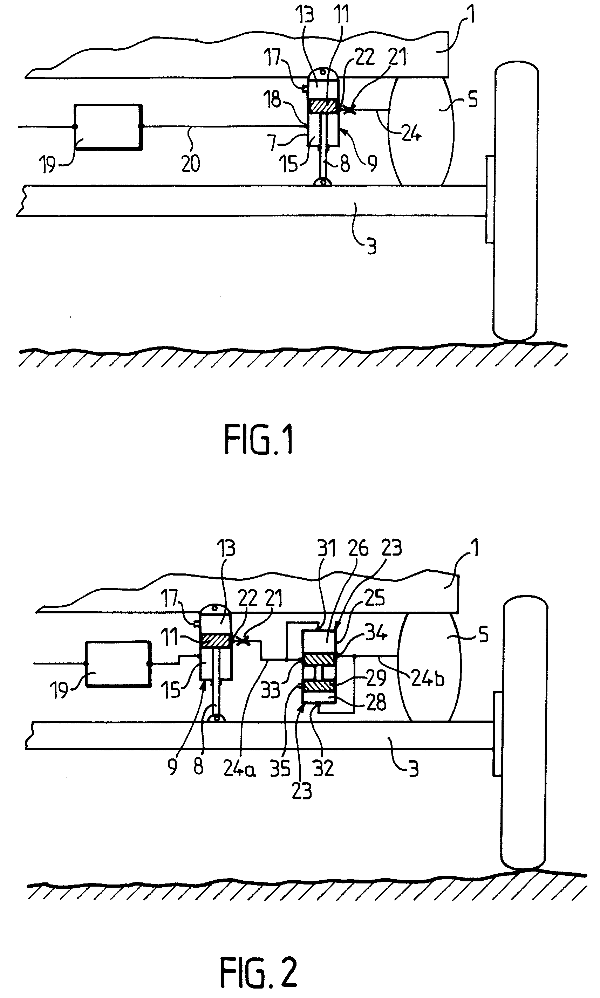

On a représenté sur la figure 1 un dispositif de suspension pour véhicule tous terrains suivant l'état antérieur de la technique. On expliquera ci-après le fonctionnement de ce dispositif de suspension afin de mieux faire ressortir par la suite les particularités du dispositif suivant l'invention

Sur cette figure 1 le châssis 1 du véhicule est solidarisé d'au moins un essieu 3 au moyen de deux dispositifs de suspension par essieu, dont un seul est représenté sur le dessin pour des raisons de symétrie.

Chaque dispositif de suspension comprend un coussin gonflable 5 sur lequel est en appui chaque extrémité transversale du châssis 1 du véhicule. Par ailleurs le corps 7 d'une valve de commande à tiroir 9 est solidarisé du châssis 1, alors que le tiroir 11 de celle-ci est solidarisé quant à lui, de l'essieu 3 par l'intermédiaire d'une tige 8. Le tiroir 11 sépare le volume interne du corps de valve 7 en deux chambres, à savoir une chambre supérieure 13 et une chambre inférieure 15. La chambre supérieure 13 est en communication avec l'atmosphère par un orifice 17, et la chambre inférieure 15 est percée d'un orifice 18 qui la fait communiquer, par une canalisation 20, avec une source de gaz sous pression 19. Par ailleurs, le corps de valve 7 est percé, d'un orifice 22 disposé, sur la figure 1, à un niveau supérieur à celui de l'orifice 18, cet orifice 22 étant relié, par une canalisation 24, au coussin 5 avec interposition d'un limiteur de débit 21.

Le fonctionnement d'un tel dispositif de suspension s'établit ainsi que décrit ci après.

Lorsque le véhicule est animé d'un mouvement uniforme sur un sol plat, le tiroir 11 se situe sensiblement au milieu du corps de valve 7 (figure 1) de façon à obturer l'orifice 22, et laisser les orifices 17 et 18 en communication avec leurs chambres respectives, si bien que les trois orifices 17,18 et 22 se trouvent ainsi isolés les uns des autres. Dans cette position du tiroir 11 le coussin 5 ne peut ni recevoir ni expulser de l'air.

Pour de faibles déplacements du châssis 1 par rapport à l'essieu 3 la situation n'est pas modifiée en raison du recouvrement de l'orifice 22 par l'épaisseur du tiroir 11. Par contre si, sous l'effet notamment d'une dénivellation brutale, le tiroir 11 vient à s'enfoncer dans le corps 7 (déplacement vers le haut sur la figure 1), suffisamment pour dégager l'orifice 22, ce dernier se trouve en communication avec la chambre inférieure 15 qui est reliée à la source de gaz sous pression 19, si bien que celle-ci alimente alors le coussin 5 qui se gonfle.

A l'opposé, si la dénivellation provoque un déplacement en sens inverse (vers le bas sur la figure 1) du tiroir 11, l'orifice 22 se trouve alors en communication avec l'atmosphère par l'intermédiaire de l'orifice 17, ce qui permet au coussin 5 de se dégonfler.

Cependant, on sait que le gonflement et le dégonflement du coussin 5 doit être effectué de façon douce et progressive sous peine de provoquer la mise en oscillation du système. C'est pourquoi on dispose habituellement en sortie de l'orifice 22 de la valve 9 un étranglement, ou limiteur de débit 21, qui a pour effet d'augmenter le temps de gonflage et de dégonflage du coussin 5.

On sait également par ailleurs qu'un véhicule amené à fonctionner dans un champ doit être à même de réagir de façon quasi-immédiate aux sollicitations de la force centrifuge. De même, lorsque ce véhicule circule sur route il doit être apte à réagir de façon quasi-immédiate aux effets de déséquilibre causés par l'accélération ou la décélération.

Or, dans les dispositifs de l'état antérieur de la technique, la présence du limiteur de débit 21 empêche le coussin 5 de se dégonfler rapidement.

Dans le dispositif suivant l'invention qui est représenté sur la figure 2, on dispose entre la valve de commande 9 et le coussin 5 une seconde valve 23, dite valve de nivellement. Cette valve 23 est par exemple formée d'un corps cylindrique 25 à l'intérieur duquel est disposé un piston libre 29 qui sépare le corps 25 en deux chambres, à savoir une chambre supérieure 26 et une chambre inférieure 28. Le corps 25 comporte cinq orifices, à savoir un premier orifice 31 disposé sur la face supérieure du corps 25, un second orifice 32 disposé sur la face inférieure de celui-ci, des troisième et quatrième orifices 33 et 34 disposés sur la face cylindrique du corps 25, sensiblement au milieu de celui-ci, et un cinquième orifice 35 qui est disposé sensiblement à mi-hauteur entre le fond et les orifices 33 et 34. Les orifices 31 et 33 sont en communication avec une canalisation 24a qui les réunit au limiteur de débit 21 disposé en sortie de la valve de commande 9. De même, les orifices 32 et 34 sont réunis à une canalisation 24b qui les réunit au coussin 5. L'orifice 35 quant à lui est ouvert sur l'atmosphère.

En position normale de fonctionnement, c'est-à-dire lorsque le véhicule est en déplacement à vitesse uniforme sur une surface plane, la valve de commande 9 est dans une position identique à celle représentée sur la figure 1. Le tiroir 29 est, quant à lui, en équilibre, sous l'effet des pressions qui s'exercent sur ses faces supérieure et inférieure, dans une position telle qu'il assure l'obturation des orifices 33,34 et 35.

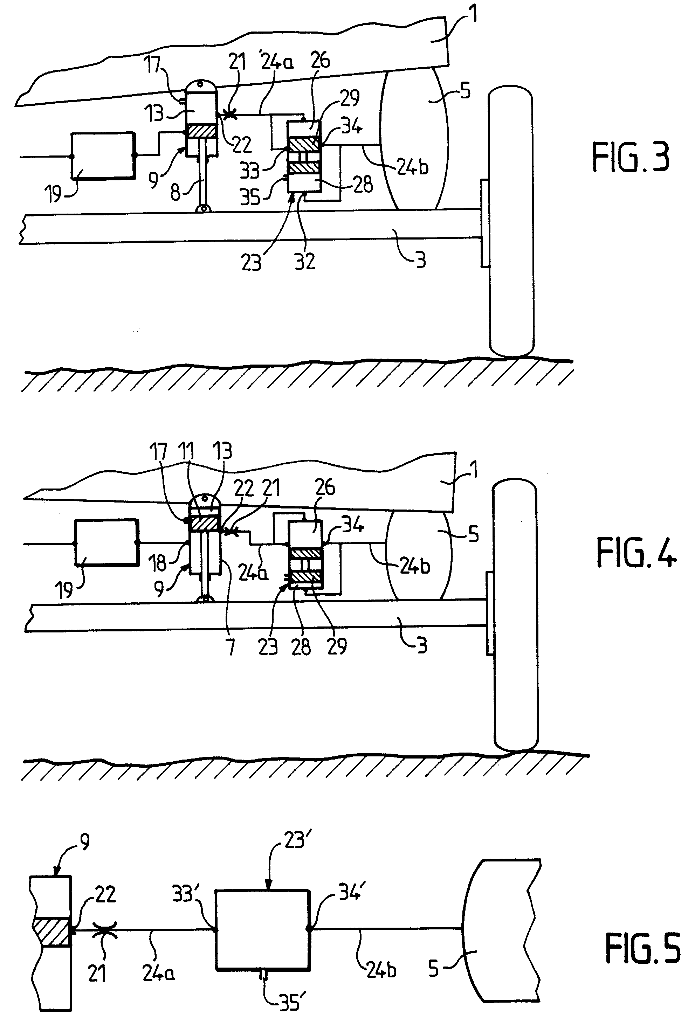

Comme représenté sur la figure 3, lorsque le véhicule effectue un virage, la force centrifuge qui s'exerce sur le châssis 1 a pour effet de soulager les coussins 5 externes, si bien que ceux-ci ont tendance à s'allonger. Dans le même temps, les points de fixation de la valve 9 au châssis 1 d'une part et à l'essieu 3 d'autre part ont tendance à s'éloigner, si bien que le tiroir 11 descend à l'intérieur du corps de valve 7, mettant ainsi l'orifice 22 en communication avec l'atmosphère via la chambre 13. Dès lors, la chambre supérieure 26 de la valve de nivellement 23 se trouve également en communication avec l'atmosphère au travers de la canalisation 24a, du limiteur de débit 21 et de l'orifice 17 de la chambre supérieure 13 de la valve de commande 9. Sous l'effet de la pression existant dans la chambre inférieure 28, qui est la pression du coussin 5, le piston 29 se déplace donc vers le haut (sur le dessin de la figure 3) et expulse par la conduite 24a le volume d'air contenu dans la chambre 26, au travers du limiteur de débit 21. Le temps de réponse existant entre le moment où le tiroir 11 libère l'orifice 22 de la valve de commande et le moment où le piston 29 de la valve de nivellement dégage l'orifice 35 est extrêmement court malgré la présence du limiteur de débit 21 puisque, le volume d'air contenu dans la chambre supérieure 26 est extrêmement faible. Dès lors, l'orifice 35 est dégagé, et le coussin 5 se trouve en communication directe avec l'atmosphère, au travers de l'orifice 35 (sans interposition de limitation de débit). Dans ces conditions, le temps nécessaire à son dégonflage est particulièrement réduit.

Ainsi que représenté sur la figure 4, l'effet de la force centrifuge qui s'exerce sur les coussins opposés (internes au virage) a pour effet de comprimer ceux-ci (figure 4). Le tiroir 11 se déplace donc vers le haut à l'intérieur du corps 7 de la valve de commande 9, si bien qu'il dégage l'orifice 18 et met en communication la source de gaz sous pression 19 avec l'orifice de sortie 22. La source de gaz sous pression 19 se trouve ainsi en communication, par la canalisation 24a avec la chambre supérieure 26 de la valve de nivellement 23 au travers du limiteur de débit 21, si bien que le piston 29 se déplace vers le bas sur la figure 4. Au cours de ce déplacement, le piston 29 dégage l'orifice 34, mettant la valve de nivellement 23 en communication avec le coussin 5, ce qui a pour effet d'assurer le gonflement de celui-ci.

On a représenté la valve de nivellement 23 sous la forme d'un corps cylindrique à l'intérieur duquel un piston 29 est monté mobile, mais on pourrait suivant l'invention remplacer ce dispositif par tout dispositif équivalent, en mesure d'assurer les fonctions de la valve décrite précédemment.

On pourrait ainsi mettre en oeuvre de façon particulièrement intéressante des valves du type dit "de décharge rapide" utilisées pour diminuer sur les véhicules le temps de desserrage des freins pneumatiques par la vidange accélérée de la pression des récepteurs de ceux-ci, notamment lorsque ces derniers sont d'un volume important.

On a représenté, de façon schématique, sur la figure 5, une telle valve de décharge rapide appliquée au dispositif suivant l'invention. Cette valve 23' est constituée d'un corps de valve comportant un orifice d'admission de fluide 33', (relié dans la présente application à la canalisation 24a), un orifice de sortie de fluide 34' (relié dans la présente application à la canalisation 24b), et un orifice de mise en communication avec l'atmosphère 35'.

La valve 23' est conçue de façon que :
- à l'état de repos, (ce qui correspond à l'état de marche normale du véhicule) les trois orifices 33', 34', 35' soient isolés les uns des autres ce qui, du point de vue fonctionnel, est équivalent au dispositif précédemment décrit en référence avec la figure 2,
- lorsque la pression à l'orifice d'entrée 33' devient plus forte que la pression à l'orifice de sortie 34' (ce qui correspond à la situation décrite précédemment en regard de la figure 4) la valve 23' autorise le passage du fluide, ce qui dans le cas de la présente application autorise le gonflage du coussin 5 par l'entremise du limiteur du débit 21,
- lorsque la pression à l'orifice d'entrée 33' chute rapidement (ce qui correspond à la situation décrite précédemment en regard de la figure 3) l'orifice de sortie 34' soit en communication avec l'atmosphère via l'orifice 35', ce qui dans la présente application autorise le dégonflage du coussin sans interposition de limiteur de débit.

## Revendications

1. Dispositif correcteur d'assiette pour véhicules et notamment pour véhicules tous terrains du type comportant une suspension par coussins élastiques gonflables (5) alimentés par une source de gaz sous pression (19) par l'intermédiaire d'une valve de commande (9), cette valve de commande (9) étant apte à commander, par l'intermédiaire d'un limiteur de débit (21), d'une part la mise en communication de la source de gaz sous pression (19) avec un coussin (5) lorsque celui-ci est comprimé et, d'autre part, la mise en communication de ce coussin (5) avec l'atmosphère lorsque le coussin (5) est décomprimé, caractérisé en ce qu'une valve de nivellement (23, 23') est interposée entre la valve de commande (9) et le coussin (5), cette valve de nivellement (23, 23') comportant des moyens aptes à mettre directement en communication avec l'atmosphère l'intérieur du coussin (5) lorsque celui-ci est soumis à une décompression rapide.

2. Dispositif suivant la revendication 1 caractérisé en ce que la valve de nivellement (23, 23') comporte au moins trois orifices, à savoir un orifice d'entrée (31, 33, 33'), un orifice de sortie (32, 34, 34') et un orifice de mise en communication avec l'atmosphère (35, 35'), cette valve étant apte :
- lorsque les pressions de fluide à l'orifice d'entrée (31, 33, 33') et à l'orifice de sortie (32, 34, 34') sont égales, à assurer l'isolation des trois orifices,
- lorsque la pression de fluide à l'orifice d'entrée (31, 33, 33') est supérieure à la pression à l'orifice de sortie (32, 34, 34'), à autoriser la mise en communication de ces deux orifices,
- lorsque la pression de fluide à l'orifice d'entrée (31, 33, 33') est inférieure à la pression à l'orifice de sortie (32, 34, 34'), à autoriser la mise en communication de l'orifice de sortie (32, 34, 34') avec l'orifice de mise en communication avec l'atmosphère (35,35').

3. Dispositif suivant la revendication 2 caractérisé en ce que la valve de nivellement est constituée d'une valve du type dit "à décharge rapide".

4. Dispositif suivant l'une des revendications 1 ou 2 caractérisé en ce que la valve de nivellement (23) comprend un piston (29) monté libre à l'intérieur d'un corps de valve (25), de façon à définir de chaque côté de celui-ci deux chambres à savoir une première chambre (26) et une seconde chambre (28), ce piston (29) étant apte à occuper au moins deux positions, à savoir :
- une position de fonctionnement normal dans laquelle la première chambre (26) est obturée et la seconde chambre (28) est en communication avec le coussin (5),
- une position de déséquilibre dans laquelle la première chambre (26) est en communication avec l'atmosphère par l'intermédiaire d'un limiteur de débit (21), et la seconde chambre (28) est en communication avec le coussin (5) et avec l'atmosphère de façon directe.

5. Dispositif suivant la revendication 4 caractérisé en ce que le piston est apte à occuper une troisième position dans laquelle le coussin (5) est soumis à une surpression, dans laquelle la première chambre (26) et la seconde chambre (28) sont en communication avec le coussin (5) et avec la source de gaz sous pression (19) par l'intermédiaire du limiteur de débit (21).
